# EUROPEAN PATENT SPECIFICATION

(11) **EP 4 018 252 B1**
(45) Date of publication and mention of the grant of the patent: **05.03.2025**
(21) Application number: 20853897.5
(22) Date of filing: 18.08.2020
(51) Int. Cl.: G02C 1/00, B08B 3/12, B08B 3/10, B08B 3/00, G02C 13/00, B08B 1/32

(54) **PORTABLE EYE-GLASSES CLEANING DEVICE**
TRAGBARE BRILLENREINIGUNGSVORRICHTUNG
DISPOSITIF DE NETTOYAGE D'UNE PAIRE DE LUNETTES PORTABLE

(30) Priority: 19.08.2019 US 201962888733 P
(43) Date of publication of application: 29.06.2022
(73) Proprietor: Rincón, Juan C., Clackamas, OR 97015 (US)
(72) Inventor: Rincón, Juan C., Clackamas, OR 97015 (US)
(74) Representative: Weisse, Moltmann & Willems PartGmbB
(86) International application number: PCT/US2020/046870
(87) International publication number: WO 2021/034869

(56) References cited:
- FR-A1- 2 646 931
- FR-A1- 2 750 223
- FR-A1- 2 750 223
- US-A- 5 988 910
- US-A1- 2005 226 678
- US-A1- 2007 039 115
- US-A1- 2012 176 677
- US-A1- 2015 113 751
- US-B2- 9 201 252
- ANONYMOUS: "Cleaning performance evaluation video.mp4 - Google Drive", 5 September 2024 (2024-09-05), pages 1 - 1, XP093201873, Retrieved from the Internet <URL:https://drive.google.com/file/d/1M2AquCrZQjicw0n5v9HPEna28rN7Cgqo/view>

## Description

### BACKGROUND

Eye-glasses users face endless difficulties to keep their glasses completely clean. Eye-glasses remain dirty because air contamination and dust easily adhere to one or more lenses of the eye-glasses. Furthermore, finger contact with lenses, as well as a user's body heat, humidity and sweating results in eyeglasses becoming foggy and dirty, which often results in discomfort for users.

Although there are a variety of eyeglasses cleaning devices in the market, none of them is based on a mixture of an electronic-mechanical apparatus that delivers a portable and effective solution for the endless problem of dirty eye-glasses.

This novel cleaning system removes dirt and dust, polishing lens in three simple steps without direct hand contact. In one hand, some effective inventions for cleaning eye-glasses are big, non-portable, impractical, time consuming and difficult to be used; on the other hand, portable, small, lightweight eye-glasses cleaners currently available in the market, have just simple manual features that are not completely effective.

Accordingly, it is desired to provided systems and methods that solve the disadvantages in the prior art.

FR 2750223 A1 discloses an eye-glasses cleaning device. The device makes it possible to clean glasses lenses using two small rotating brushes provided with interchangeable foams, operated by two electric motors. The motors are housed just above the two brushes and are connected to an accumulator by two electrical wires each. The device's operation involves placing lenses between the foams, initiating the electric motors via a magnet contact when the foams are brought together.

US 20150113751 A1 relates to a cleaning tool which is configured to remove debris from a glass surface. The cleaning tool includes an upper arm mechanically coupled to an upper pad. A lower arm is rotationally coupled to the upper arm and mechanically coupled to a lower pad. The upper pad and the lower pad are configured to clean both sides of the glass Surface at once.

US 20050226678 A1 discloses an apparatus for cleaning eyeglasses that includes a housing, a fluid reservoir, and an evacuation apparatus (such as a pump) for pressurized evacuation of fluid out of the fluid reservoir. Two arms are attached to the housing at their proximal ends and, in their nominal orientations, extend (preferably at an outward angle) from the housing. In a preferred embodiment, each arm has a wiping pad at its distal end and is spring-biased into its nominal orientation, Such that the wiping pads may be compressed toward each other.

FR 2646931 A1 discloses a cleaning device for optical glasses, addressing the common issue of fogging, dust, or dirt. The device features two beveled discs covered with chamois fabric and a sponge, connected by a foot and a bent arm with a return spring for constant pressure. The fabric can be easily replaced. Another variation includes a motorized version with a pulley-shaped cleaning disc, operated by a motor housed in a container. Two motors can be used for simultaneous cleaning.

### BRIEF SUMMARY OF THE INVENTION

It is an object of the present invention to provide a method and system for a portable eye-glasses cleaner.

It is an object of the device to be small and lightweight.

It is an object of the device to fit on the palm of a hand of a user.

It is an object of the device to be easily used, carried on and stored, giving peace of mind to users.

### BRIEF DESCRIPTION OF THE DRAWINGS

For better understanding and avoiding overcrowded and confusing figures, wires, connectors, screws, pins and other small parts are not shown in figures, additionally not all components are shown within all the following three figures:
**Fig. 1****.** Shows left side view of an embodiment of the device;
**Fig. 2****.** Illustrates front or elevation view of an embodiment of the device;
**Fig. 3****.** Presents top view or floor of an embodiment of the device.

### DETAILED DESCRIPTION AND BEST MODE OF IMPLEMENTATION

In the following description, numerous details are set forth for the purpose of explanation. However, one of ordinary skill in the art will realize that the invention is defined in the claims.

According to embodiments of the invention, all components are set in one single device that could be made of several kind of materials, such as any kind of plastic and/or metallic elements, as well as electronic and mechanical components, which can be configured in different positions and arrangements into the device.

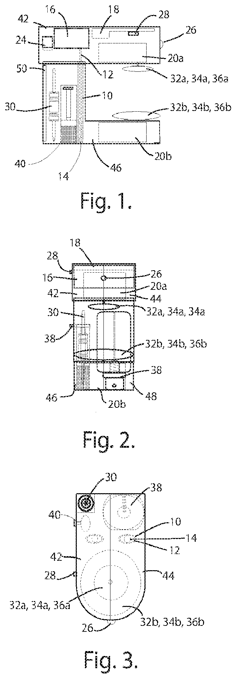

The invention comprises the following elements: the device includes a well-designed mechanism to move the left and right (42 and 44) covers on a vertical axis over the left and right (46 and 48) bases and provide rotational motion to the upper and lower holder plates (32a and 32b). These elements are shown in FIGs. 1-3, which is an exemplary embodiment of the invention.

With the aim of providing a softer cleaning a upper circular cushion (34a) will be added and glued on the bottom of upper holder plate (32a), as well as on the top of lower holder plate (34b); thus, two (2) circular cushions will be set between holders plates (32a and 32b) and substitutable cleaning pad (36a and 36b). These cushions will provide an additional protection lay between holder plates and lens, minimizing lens damage possibilities.

Following a rectilinear motion over Y axis, assembled junction covers (42 and 44), move vertically up and down over the lower assembled (46 and 48) bases; throughout a number of sets of pistons (12), cylinders (10) and micro-springs (14) or other compression mechanism.

Inside the cylinders (10) and between left and right assembled bases (44 and 46) and the set of pistons (12) are the micro-springs (14), which once squeezed create a load to move up the left and right (42 and 44) assembled covers. In certain embodiments, the device could have 1, 2, 3 or more sets of cylinders, pistons and micro-springs and alternatively can use a different moving compression mechanism.

According to the invention, the upper holder plate (32a) and the upper circular cushion (34a), covered with the upper substitutable cleaning pad (36a) is gathered to the axis of the upper worm gear motor (20a), which is assembled with its pivot down between the left and right covers (42 and 44). According to the invention, just below the same vertical Y axis of upper micromotor (20a) between the left and right bases (46 and 48), is put together with its pivot up; the lower micromotor (20b), on which axis is assembled the lower holder plate (32b) covered with the lower circular cushion (34b) and the lower substitutable cleaning pad (36b). Substitutable cleaning pads of the device can be manufactured using microfiber cloth, or other eye-glasses cleaning fabric or material.

If rotational motion is provided by worm gear micromotors (20a and 20b), they will be fed by a battery (16) which could be either regular or rechargeable, last one with the help of a battery charger circuit (18). The Device could be turn on by a limit switch (24) that could be located at the rear bottom of assembled left and right covers (42 and 44).

A LED chip (26) could be located in front side of the device covers and is turned on by a circuit incorporated LED switch (28), which is located at the left side of the right cover. Battery charger circuit (18) is placed at the top, but under the device assembled covers (42 and 44).

In certain embodiments, some of these components are set together by wires and connectors (22) to deliver the required energy from the rechargeable battery (16). The portable electronic-mechanical eye-glasses cleaning device could be manufactured using worm gear micromotors or other substitution manual impulse mechanism, electric, electronic or magnetic components, which also provide rotational motion to the upper and lower holder plates (32a and 32b).

In certain embodiments, a Retractable cleaning brush (40) could be assembled into the left base (46) and could be manually operated by a moving button on the side of the device. On the back of the left and right bases (46 and 48) junction is a double volume compartment box, which contains the refillable spray mini bottle for eye-glasses cleaner solution (38), and the double ended eye-glasses screwdriver (30). The double volume compartment box is closed by the back-compartment slide lid (50).

In certain embodiments, the device may be assembled according to different methods, one of them will be the following:
(1) Assemble left junction composed by the left base and cover. Left base could incorporate a set of cylinders, likewise left cover could incorporate a set of pistons, thus prior to assemble left base and cover, insert one micro spring into each one of cylinders, then take care that pistons get into its corresponding cylinders and get locked.
(2) Using corresponding wires and connectors, connect charging circuit with the following inner components: a) the battery, b) the LED chip, and c) the limit switch; then connect the limit switch the upper and lower worm gear motors.
(3) Set all prior wire connected components; charger circuit, rechargeable battery, limit switch, upper worm gear motor, and lower worm gear motor into the assembled left base and cover. Upper worm gear micromotors axes may be on the same vertical line of the lower micromotor axes.
(4) Assemble right junction composed by the right base and right cover. Right base could incorporate a set of cylinders, likewise right cover could incorporate a set of pistons; thus, prior to assemble right base and cover, insert one micro spring into each one of cylinders, then take care that pistons get into its corresponding cylinders and get locked.
(5) Then get together the previously assembled left junction over which inner components have been already installed, with the previously assembled right junction, securing both left and right junctions with corresponding pins and screws.
(6) Set the lower holder plate on the lower worm gear micromotor axes and also set the upper holder plate on the upper worm gear micromotor axes.
(7) Put on the upper and lower circular cushions on the corresponding holder plates.
(8) Put on the upper and lower substitutable pads on the corresponding circular cushions and holder plates.
(9) Then install retractile cleaning brush
(10) Set up and secure the accessories such as double ended eye-glasses screwdriver, and the refillable spray mini bottle for eye-glasses cleaner solution into the backside boxes of the base junction, which finally will be closed with the back-compartment slide lid.

Having thus described several embodiments for practicing the inventive method, its advantages and objectives can be easily understood.

### List of components:

10. Sets of cylinders
12. Sets of pistons
14. Sets of micro-springs inside the cylinders
16. Rechargeable battery
18. Battery charger circuit
20a. Upper worm gear micromotor
20b. Lower worm gear micromotor
22. Wires and connectors
24. Limit Switch
26. LED Chip
28. LED Switch (incorporated into the battery charger circuit)
30. Double ended eye-glasses screwdriver
32a. Upper holder plate
32b. Lower holder plate
34a. Upper circular cushion
34a. Lower circular cushion
36a. Upper substitutable cleaning pad
36b. Lower substitutable cleaning pad
38. Refillable spray mini bottle for eye-glasses cleaner solution
40. Retractable cleaning brush

## Claims

1. An electromechanical portable eye-glasses cleaning device comprising:
a left assembled cover (42) and a right assembled cover (44);
a left assembled base (46) and a right assembled base (48); and
an upper holder plate (32a) and a lower holder plate (32b); and
an upper worm gear micromotor (20a) and a lower worm gear micromotor (20b) which are fed by a battery (16), providing rotational motion to the upper holder plate (32a) and lower holder plate (32b); and
wherein the upper holder plate (32a) is set on the axes of the upper worm gear micromotor (20a) which is assembled with its pivot down between the left assembled cover (42) and the right assembled cover (44) and the lower holder plate (32b) is set on the axes of the lower worm gear micromotor (20a) which is assembled with its pivot up between the left assembled base (46) and the right assembled base (48);
an upper circular cushion (34a) and a lower circular cushion (34b) glued to the bottom of the upper holder plate (32a) and to the top of the lower holder plate (32b) respectively; and
an upper microfiber cleaning pad (36a) and a lower microfiber cleaning pad (36b), wherein the upper microfiber cleaning pad (36a) covers the upper holder plate (32a) and the upper circular cushion (34a), and the lower microfiber cleaning pad (36b) covers the lower holder plate (32b) and the lower circular cushion (34b);
wherein pressure on the left assembled cover (42) and the right assembled cover (44) will cause the left assembled cover (42) and the right assembled cover (44) to move on a vertical axis over the left assembled base (46) and the right assembled base (48), making both the upper microfiber cleaning pad (36a) and the lower microfiber cleaning pad (36b) simultaneously come into contact with both sides of a glasses lens, thereby providing a uniform, soft and effective cleaning by the rotation friction of microfiber pads (36a, 36b) without leaving lines or spots in their path and without causing damage to the glasses lens.

2. The device according to claim 1
**characterized in that,**
the device comprises a limit switch (24) which is configured to activate the upper worm gear micromotor (20a) and the lower worm gear micromotor (20b).

3. The device according to any of the preceding claims
**characterized in that,**
the device comprises a LED chip (26) which is located in front side of the left assembled cover (42) and the right assembled cover (44); wherein the LED chip (26) is turned on by a circuit incorporated LED switch (28) which is located at the left side of the right assembled cover (42).

4. The device according to any of the preceding claims
**characterized in that,**
the left assembled cover (42) and the right assembled cover (44) are configured to move vertically up and down over the left assembled base (46) and the right assembled base (48) through a number of sets of pistons (12), cylinders (10) and micro-springs (14).

5. The device according to claim 4
**characterized in that,**
inside the cylinders (10) and between the left assembled base (46) and the right assembled base (48) and the set of pistons (12) are the micro-springs (14), which once squeezed create a load to move up the left assembled cover (42) and the right assembled cover (44).

6. The device according to any of the preceding claims
**characterized in that,**
the device comprises a double volume compartment box on the back of the left assembled base (46) and the right assembled base (48) which contains the refillable spray mini bottle for eye-glasses cleaner solution (38), and a double ended eye-glasses screwdriver (30).

7. The device according to any of the preceding claims
**characterized in that,**
a retractable cleaning brush (40) is assembled into the left assembled base (46) and is preferably manually operated by a moving button on the side of the device.

8. A method of cleaning portable eye-glasses comprising:
providing a device according to claim 1;
placing a glasses lens between the upper and lower microfiber cleaning pads (36a, 36b);
pressing down the left assembled cover (42) and the right assembled cover (44), thereby allowing them to move vertically down along a vertically axis,
providing an electronic feeding of rotational motion to the holder plates (32a, 32b) by means of the micromotors (20a, 20b) fed by the battery (16) and wires;
activated by an inner limit switch (24), giving the holder plates (32a, 32b) required rotational motion,
simultaneously contacting both sides of the lens with the upper and the lower microfiber cleaning pads (36a, 36b), providing a uniform, soft and effective cleaning by the rotation friction of microfiber pads (36a, 36b); without leaving lines or spots in their path and without causing damage to the lens.

9. The method of claim 8, further comprising removing excess of dust from both eye-glasses lens faces with a retractile cleaning brush (40) prior to the step of placing the glasses lens between the upper and lower microfiber cleaning pads (36a, 36b).

10. The method of claim 8 or claim 9, further comprising puting eye-glasses cleaning solution on both sides of lens using a refillable spray mini bottle for eye-glasses cleaner solution (38) prior to the step of placing the glasses lens between the upper and lower microfiber cleaning pads (36a, 36b).

## Patentansprüche

1. **Elektromechanische, tragbare Vorrichtung zum Reinigen von Brillen,** umfassend:
• eine links zusammengebaute Abdeckung (42) und eine rechts zusammengebaute Abdeckung (44);
• eine links zusammengebaute Basis (46) und eine rechts zusammengebaute Basis (48);
• eine obere Halteplatte (32a) und eine untere Halteplatte (32b); sowie
• einen oberen Schneckengetriebe-Mikromotor (20a) und einen unteren Schneckengetriebe-Mikromotor (20b), die von einer Batterie (16) gespeist werden und eine Drehbewegung an die obere Halteplatte (32a) bzw. die untere Halteplatte (32b) übertragen;
wobei
• die obere Halteplatte (32a) auf den Achsen des oberen Schneckengetriebe-Mikromotors (20a) angebracht ist, der mit seinem Zapfen nach unten zwischen der links zusammengebauten Abdeckung (42) und der rechts zusammengebauten Abdeckung (44) montiert ist, und
• die untere Halteplatte (32b) auf den Achsen des unteren Schneckengetriebe-Mikromotors (20b) angebracht ist, der mit seinem Zapfen nach oben zwischen der links zusammengebauten Basis (46) und der rechts zusammengebauten Basis (48) montiert ist;
• ein oberes kreisförmiges Polster (34a) und ein unteres kreisförmiges Polster (34b), die jeweils auf der Unterseite der oberen Halteplatte (32a) bzw. auf der Oberseite der unteren Halteplatte (32b) befestigt sind;
• ein oberes Mikrofasereinigungspad (36a) und ein unteres Mikrofasereinigungspad (36b), wobei das obere Mikrofasereinigungspad (36a) die obere Halteplatte (32a) und das obere kreisförmige Polster (34a) überdeckt und das untere Mikrofasereinigungspad (36b) die untere Halteplatte (32b) und das untere kreisförmige Polster (34b) überdeckt;
• durch Ausüben von Druck auf die links zusammengebaute Abdeckung (42) und die rechts zusammengebaute Abdeckung (44) werden diese entlang einer Vertikalachse über der links zusammengebauten Basis (46) und der rechts zusammengebauten Basis (48) bewegt, wodurch das obere Mikrofasereinigungspad (36a) und das untere Mikrofasereinigungspad (36b) gleichzeitig mit beiden Seiten eines Brillenglases in Berührung kommen und so eine gleichmäßige, schonende und effiziente Reinigung durch rotierende Reibung der Mikrofasereinigungspads (36a, 36b) ermöglichen, ohne Streifen oder Flecken zu hinterlassen und ohne das Brillenglas zu beschädigen.

2. **Vorrichtung nach Anspruch 1,**
**dadurch gekennzeichnet, dass** sie einen Endschalter (24) umfasst, der zum Aktivieren des oberen Schneckengetriebe-Mikromotors (20a) und des unteren Schneckengetriebe-Mikromotors (20b) ausgelegt ist.

3. **Vorrichtung nach einem der vorhergehenden Ansprüche,**
**dadurch gekennzeichnet, dass** sie einen LED-Chip (26) aufweist, der an der Vorderseite der links zusammengebauten Abdeckung (42) und der rechts zusammengebauten Abdeckung (44) angeordnet ist, wobei der LED-Chip (26) vorzugsweise von einem in einer Schaltung integrierten LED-Schalter (28) eingeschaltet wird, der sich an der linken Seite der rechts zusammengebauten Abdeckung (44) befindet.

4. **Vorrichtung nach einem der vorhergehenden Ansprüche,**
**dadurch gekennzeichnet, dass** die links zusammengebaute Abdeckung (42) und die rechts zusammengebaute Abdeckung (44) so ausgeführt sind, dass sie sich vertikal nach oben und unten über der links zusammengebauten Basis (46) und der rechts zusammengebauten Basis (48) bewegen können, und zwar mittels einer Anzahl von Kolben (12), Zylindern (10) und Mikro-Federn (14).

5. **Vorrichtung nach Anspruch 4,**
**dadurch gekennzeichnet, dass** sich innerhalb der Zylinder (10) zwischen der links zusammengebauten Basis (46), der rechts zusammengebauten Basis (48) und den Kolben (12) die Mikro-Federn (14) befinden, die beim Zusammendrücken eine Kraft erzeugen, welche die links zusammengebaute Abdeckung (42) und die rechts zusammengebaute Abdeckung (44) wieder nach oben bewegt.

6. **Vorrichtung nach einem der vorhergehenden Ansprüche,**
**dadurch gekennzeichnet, dass** sie ein Fach an der Rückseite der links zusammengebauten Basis (46) und der rechts zusammengebauten Basis (48) aufweist, das eine nachfüllbare Sprühminiflasche (38) mit Brillenreinigungsflüssigkeit sowie einen beidseitig verwendbaren Brillenschraubendreher (30) enthält.

7. **Vorrichtung nach einem der vorhergehenden Ansprüche,**
**dadurch gekennzeichnet, dass** eine ausziehbare Reinigungsbürste (40) in die links zusammengebaute Basis (46) integriert ist, welche vorzugsweise manuell über eine Verschiebetaste an der Seite der Vorrichtung betätigt wird.

8. **Verfahren zum Reinigen tragbarer Brillen,** umfassend:
• die Verwendung einer Vorrichtung nach Anspruch 1;
• das Platzieren eines Brillenglases zwischen den oberen und unteren Mikrofasereinigungspads (36a, 36b);
• das Ausüben von Druck auf die links zusammengebaute Abdeckung (42) und die rechts zusammengebaute Abdeckung (44), sodass sich diese entlang einer Vertikalachse nach unten bewegen;
• die elektronische oder mechanische Zuführung einer Drehbewegung an die Halteplatten (32a, 32b) mittels eines Impulsmechanismus oder durch die von einer Batterie (16) gespeisten Mikromotoren (20a, 20b) und Leitungen, die durch einen internen Endschalter (24) aktiviert werden und die erforderliche Drehbewegung auf die Halteplatten (32a, 32b) übertragen;
• das gleichzeitige Berühren beider Seiten des Brillenglases mit den oberen und unteren Mikrofasereinigungspads (36a, 36b), wodurch ein gleichmäßiges, schonendes und effizientes Reinigen durch die rotierende Reibung der Mikrofasereinigungspads (36a, 36b) ermöglicht wird, ohne Streifen oder Flecken zu hinterlassen und ohne das Glas zu beschädigen.

9. **Verfahren nach Anspruch 8,**
**dadurch gekennzeichnet, dass** überschüssiger Staub von beiden Seiten des Brillenglases mit einer ausziehbaren Reinigungsbürste (40) entfernt wird, bevor das Brillenglas zwischen den oberen und unteren Mikrofasereinigungspads (36a, 36b) platziert wird.

10. **Verfahren nach Anspruch 8 oder 9,**
**dadurch gekennzeichnet, dass** vor dem Platzieren des Brillenglases zwischen den oberen und unteren Mikrofasereinigungspads (36a, 36b) auf beide Seiten des Glases mittels einer nachfüllbaren Sprühminiflasche (38) Reinigungsflüssigkeit für Brillen aufgebracht wird.

## Revendications

1. **Dispositif électromécanique portatif de nettoyage de lunettes,** comprenant :
• un couvercle assemblé gauche (42) et un couvercle assemblé droit (44) ;
• une base assemblée gauche (46) et une base assemblée droite (48) ;
• une plaque de support supérieure (32a) et une plaque de support inférieure (32b) ;
• un micromoteur à vis sans fin supérieur (20a) et un micromoteur à vis sans fin inférieur (20b), alimentés par une batterie (16), fournissant un mouvement de rotation à la plaque de support supérieure (32a) et à la plaque de support inférieure (32b) ;
ledit dispositif étant **caractérisé en ce que** :
∘ la plaque de support supérieure (32a) est disposée sur les axes du micromoteur à vis sans fin supérieur (20a), lequel est monté avec son pivot orienté vers le bas entre le couvercle assemblé gauche (42) et le couvercle assemblé droit (44), et
o la plaque de support inférieure (32b) est disposée sur les axes du micromoteur à vis sans fin inférieur (20b), lequel est monté avec son pivot orienté vers le haut entre la base assemblée gauche (46) et la base assemblée droite (48),
o un coussinet circulaire supérieur (34a) et un coussinet circulaire inférieur (34b) sont respectivement collés au-dessous de la plaque de support supérieure (32a) et au-dessus de la plaque de support inférieure (32b),
o un tampon de nettoyage en microfibre supérieur (36a) et un tampon de nettoyage en microfibre inférieur (36b) recouvrent respectivement la plaque de support supérieure (32a) et le coussinet circulaire supérieur (34a), ainsi que la plaque de support inférieure (32b) et le coussinet circulaire inférieur (34b),
o l'application d'une pression sur le couvercle assemblé gauche (42) et le couvercle assemblé droit (44) provoque le déplacement de ces derniers selon un axe vertical au-dessus de la base assemblée gauche (46) et de la base assemblée droite (48), amenant simultanément le tampon de nettoyage en microfibre supérieur (36a) et le tampon de nettoyage en microfibre inférieur (36b) à entrer en contact avec les deux faces d'un verre de lunettes, assurant ainsi un nettoyage uniforme, doux et efficace par friction rotative des tampons en microfibre (36a, 36b), sans laisser de traces ni de marques et sans causer de dommages audit verre de lunettes.

2. **Dispositif selon la revendication 1,**
**caractérisé en ce qu'**il comprend un interrupteur de fin de course (24) configuré pour activer le micromoteur à vis sans fin supérieur (20a) et le micromoteur à vis sans fin inférieur (20b).

3. **Dispositif selon l'une quelconque des revendications précédentes,**
**caractérisé en ce qu'**il comprend une puce LED (26) située à l'avant du couvercle assemblé gauche (42) et du couvercle assemblé droit (44), ladite puce LED (26) étant de préférence mise sous tension par un interrupteur à LED (28) incorporé dans un circuit, positionné sur le côté gauche du couvercle assemblé droit (42).

4. **Dispositif selon l'une quelconque des revendications précédentes,**
**caractérisé en ce que** le couvercle assemblé gauche (42) et le couvercle assemblé droit (44) sont configurés pour se déplacer verticalement vers le haut et vers le bas au-dessus de la base assemblée gauche (46) et de la base assemblée droite (48) au moyen d'un ensemble de pistons (12), de cylindres (10) et de micro-ressorts (14).

5. **Dispositif selon la revendication 4,**
**caractérisé en ce qu'**à l'intérieur des cylindres (10), entre la base assemblée gauche (46), la base assemblée droite (48) et l'ensemble de pistons (12), sont disposés lesdits micro-ressorts (14) qui, lorsqu'ils sont comprimés, génèrent un effort de rappel permettant de relever le couvercle assemblé gauche (42) et le couvercle assemblé droit (44).

6. **Dispositif selon l'une quelconque des revendications précédentes,**
**caractérisé en ce qu'**il comprend un compartiment situé à l'arrière de la base assemblée gauche (46) et de la base assemblée droite (48), lequel contient un mini-flacon pulvérisateur rechargeable (38) de solution de nettoyage pour lunettes et un tournevis pour lunettes à double embout (30).

7. **Dispositif selon l'une quelconque des revendications précédentes,**
**caractérisé en ce qu'**une brosse de nettoyage rétractable (40) est intégrée à la base assemblée gauche (46), ladite brosse étant de préférence actionnée manuellement au moyen d'un bouton coulissant situé sur le côté du dispositif.

8. **Procédé de nettoyage de lunettes portatives,** comprenant :
• la mise en œuvre d'un dispositif selon la revendication 1 ;
• le placement d'un verre de lunettes entre les tampons de nettoyage en microfibre supérieur (36a) et inférieur (36b) ;
• la pression exercée sur le couvercle assemblé gauche (42) et le couvercle assemblé droit (44), les amenant à se déplacer verticalement vers le bas le long d'un axe vertical ;
• l'alimentation électronique ou mécanique pour fournir un mouvement de rotation aux plaques de support (32a, 32b) au moyen d'un mécanisme d'impulsion ou des micromoteurs (20a, 20b) alimentés par une batterie (16) et des fils, lesquels sont activés par un interrupteur de fin de course interne (24), procurant le mouvement de rotation requis auxdites plaques de support (32a, 32b) ;
• la mise en contact simultanée des deux faces du verre avec les tampons de nettoyage en microfibre supérieur (36a) et inférieur (36b), assurant un nettoyage uniforme, doux et efficace par friction rotative des tampons en microfibre (36a, 36b) sans laisser de traces ni de marques et sans causer de dommages audit verre.

9. **Procédé selon la revendication 8,**
comprenant en outre l'élimination de l'excès de poussière sur les deux faces du verre de lunettes à l'aide de la brosse de nettoyage rétractable (40) avant l'étape de placement du verre de lunettes entre les tampons de nettoyage en microfibre supérieur (36a) et inférieur (36b).

10. **Procédé selon la revendication 8 ou 9,**
comprenant en outre l'application d'une solution de nettoyage pour lunettes sur les deux faces du verre au moyen d'un mini-flacon pulvérisateur rechargeable (38), avant l'étape de placement du verre de lunettes entre les tampons de nettoyage en microfibre supérieur (36a) et inférieur (36b).
